# EUROPÄISCHE PATENTSCHRIFT

(11) **EP 2 774 799 B1**
(45) Veröffentlichungstag und Bekanntmachung des Hinweises auf die Patenterteilung: **14.04.2021**
(21) Anmeldenummer: 14001448.1
(22) Anmeldetag: 02.07.2010
(51) Int. Cl.: B60L 53/30, B60L 53/16, B60L 53/66

(54) **Verfahren zur Kommunikation zwischen einem Elektrofahrzeug und einer Ladestelle zum elektrischen Laden zumindest eines Energiespeichers des Elektrofahrzeugs**
Method for communication between an electric vehicle and a charging station for electric charging of at least one energy storage device of the electric vehicle
Procédé de communication entre un véhicule électrique et une borne de charge destinée au chargement électrique d'au moins un dispositif de stockage d'énergie du véhicule électrique

(30) Priorität: 15.07.2009 DE 102009033305; 12.03.2010 DE 102010011162
(43) Veröffentlichungstag der Anmeldung: 10.09.2014
(62) Teilanmeldung aus: 10728229.5
(73) Patentinhaber: Siemens Aktiengesellschaft, 80333 München (DE)
(72) Erfinder: Heuer, Jörg, 82041 Oberhaching (DE); Winter, Martin, 83024 Rosenheim (DE)

(56) Entgegenhaltungen:
- EP-A2- 0 646 995
- DE-A1- 19 642 687
- US-A1- 2009 177 580
- Lazzaro Volker: "Ladesysteme für Elektrofahrzeuge", , 18. Februar 2009 (2009-02-18), XP055059064, Gefunden im Internet: URL:http://www.emfm.de/downloads/spezifika tion-mennekes-ladesysteme-rev10.pdf [gefunden am 2013-04-10]
- EV CHARGING SYSTEMS COMMITEE: "(R) SAE Electric Vehicle Conductive Charge Coupler J1772", 19961001 , Bd. J1772, Nr. REV. NOV2001 1. Oktober 1996 (1996-10-01), Seiten 1-32, XP002666503, Gefunden im Internet: URL:http://bzwxw.com/soft/UploadSoft/new5/ SAE--J1772-2001.pdf [gefunden am 2012-01-02]

## Beschreibung

Die Erfindung betrifft ein Verfahren zur Kommunikation zwischen einem Elektrofahrzeug und einer Ladestelle zum elektrischen Laden zumindest eines Energiespeichers des Elektrofahrzeugs und ein entsprechendes Kommunikationssystem sowie ein Elektrofahrzeug und eine elektrische Ladestelle.

Die elektrischen Energiespeicher von Elektrofahrzeugen können heutzutage an dafür vorgesehenen Ladestellen wieder aufgeladen werden. Hierzu verbindet der Fahrzeugnutzer sein Fahrzeug über ein Ladekabel mit der Ladestelle und initialisiert in geeigneter Weise den Ladevorgang, beispielsweise durch eine Authentisierung mittels eines Codes an der Ladestelle. Im Rahmen des Ladevorgangs werden dabei über einen oder mehrere Kommunikationskanäle zwischen Fahrzeug und Ladestelle Informationen betreffend den Ladevorgang übermittelt.

Um ein unbefugtes Entfernen des Ladekabels von der Ladestelle während des Ladevorgangs zu vermeiden, ist es bekannt, den Anschluss des Ladekabels, der beim Laden mit einem entsprechenden Anschluss der Ladestelle verbunden ist, mit einer Verriegelungsvorrichtung auszustatten, welche per Schlüssel oder durch Eingabe eines Zahlencodes den Anschluss des Ladekabels an der Ladestelle verriegelt. Diese Art der Verriegelung erweist sich jedoch beim flächigen Einsatz von Elektrofahrzeugen für nicht praktikabel, da hierfür an eine große Anzahl von Nutzer entsprechende Schlüssel bzw. Zahlencodes, gegebenenfalls auch für unterschiedliche Betreiber von Ladestellen, ausgegeben werden müssen.

Das Dokument US 2009 / 0177580 A1 beschreibt eine Methode zum Eintreiben von Steuern auf einen Energieverbrauch eines Elektrofahrzeugs für eine Ladung übertragen zwischen einer lokalen Energiequelle und dem Elektrofahrzeug.

Aufgabe der Erfindung ist es deshalb, im Rahmen des Ladevorgangs eines Elektrofahrzeugs an einer Ladestelle eine einfache Möglichkeit zur Verriegelung bzw. Entriegelung des Anschlusses des Ladekabels an einem Anschluss der Ladestelle zu ermöglichen.

Diese Aufgabe wird durch das Verfahren gemäß Patentanspruch 1 bzw. das System gemäß Patentanspruch 11 bzw. die Ladestelle gemäß Patentanspruch 13 gelöst. Weiterbildungen der Erfindung sind in den abhängigen Ansprüchen definiert.

In dem erfindungsgemäßen Verfahren zur Kommunikation zwischen einem Elektrofahrzeug und einer Ladestelle ist das Elektrofahrzeug beim Ladevorgang an die Ladestelle über eine verriegelbare mechanische Kopplung zwischen einem Anschluss eines mit dem Elektrofahrzeug verbundenen Ladekabels und einem Anschluss der Ladestelle angeschlossen, um über das Ladekabel zumindest einem elektrischen Energiespeicher des Elektrofahrzeugs Ladestrom von der Ladestelle zuzuführen. Im Rahmen des Ladevorgangs werden dabei basierend auf einer Kommunikation zwischen Elektrofahrzeug und Ladestelle Informationen übermittelt. Der Begriff "im Rahmen des Ladevorgangs" ist dabei weit auszulegen und umfasst insbesondere eine Informationsübermittlung während und/oder im Vorfeld und/oder nachgeschaltet zu einem Ladevorgang, beispielsweise zum Initialisieren bzw. Beenden des Ladevorgangs.

Das erfindungsgemäße Verfahren zeichnet sich dadurch aus, dass die übertragenen Informationen eine von dem Elektrofahrzeug an die Ladestelle übermittelte Signalisierung zur Verriegelung und/oder Entriegelung der mechanischen Kopplung umfassen, wobei über die Signalisierung in der Ladestelle eine Verriegelung und/oder Entriegelung der mechanischen Kopplung zwischen dem Anschluss des Ladekabels und dem Anschluss der Ladestelle ausgelöst wird.

Durch das erfindungsgemäße Verfahren wird in geeigneter Weise eine Fernverriegelung bzw. Fernentriegelung des Anschlusses des Ladekabels an einem entsprechenden Anschluss der Ladestelle über das Elektrofahrzeug erreicht. Diese Verriegelung bzw. Entriegelung wird über eine Kommunikation zwischen Fahrzeug und Ladestelle bewirkt, so dass es erfindungsgemäß nicht erforderlich ist, eine Verriegelung bzw. Entriegelung direkt an der Ladestelle mittels eines entsprechenden Schlüssels bzw. eines Zahlencodes durchzuführen.

Die Signalisierung zum Entriegeln bzw. Verriegeln der mechanischen Kopplung kann erfindungsgemäß auf verschiedene Art und Weise erfolgen, insbesondere können zur Signalisierung bereits bekannte Signale bzw. Signalfolgen verwendet werden, welche nunmehr in der Ladestelle auch derart interpretiert werden, dass hierdurch ein Verriegeln bzw. Entriegeln des Anschlusses des Ladekabels an der Ladestelle erreicht wird. Es ist jedoch auch möglich, dass zum Verriegeln bzw. Entriegeln separate, ausschließlich für den Vorgang der Verriegelung bzw. Entriegelung vorgesehene Steuersignale von dem Fahrzeug an die Ladestelle übertragen werden, um dort die Verriegelung bzw. Entriegelung auszulösen.

Die verriegelbare mechanische Kopplung zwischen dem Anschluss des Ladekabels und dem Anschluss der Ladestelle kann beliebig ausgestaltet sein. In einer bevorzugten Variante ist diese Kopplung eine Steckverbindung, bei der ein Stecker des Ladekabels in eine entsprechende Buchse in die Ladestelle eingesteckt wird. Durch eine geeignete Verriegelungsvorrichtung, beispielsweise über einen oder mehrere Zapfen, welche in korrespondierende Nuten eingreifen, kann hierdurch eine Verriegelung bewirkt werden. Unter Verriegelung ist dabei allgemein eine Befestigung des Anschlusses des Ladekabels am Anschluss der Ladestelle derart zu verstehen, dass ein unautorisierter Benutzer diese Anschlüsse nicht bzw. nur unter Gewalteinwirkung voneinander trennen kann.

In einer besonders bevorzugten Ausführungsform des erfindungsgemäßen Verfahrens ist die Signalisierung zur Verriegelung und/oder Entriegelung der mechanischen Kopplung mit einer Signalisierung betreffend den Ladevorgang und/oder Ladezustand des zumindest einen Energiespeichers des Elektrofahrzeugs gekoppelt, insbesondere mit einer Signalisierung zum Starten und/oder Beenden des Ladevorgangs und/oder zum Anlegen und/oder Freischalten einer Spannung auf dem Ladekabel durch die Ladestelle. Alternativ bzw. zusätzlich besteht jedoch auch die Möglichkeit, die Signalisierung zur Verriegelung und/oder Entriegelung der mechanischen Kopplung derart auszugestalten, dass sie von einer Signalisierung betreffend den Ladevorgang und/oder Ladezustand des zumindest einen Energiespeichers des Elektrofahrzeugs entkoppelt ist.

Zur Kommunikation zwischen Elektrofahrzeug und Ladestelle können eine bzw. mehrere, beliebig ausgestaltete Kommunikationsverbindungen verwendet werden. Insbesondere können auch bereits aus dem Stand der Technik bekannte Kommunikationsverbindungen eingesetzt werden. In einer bevorzugten Variante wird über zumindest eine der folgenden Kommunikationsverbindungen die Signalisierung zur Verriegelung und/oder Entriegelung der mechanischen Kopplung übermittelt:
- eine PLC-Kommunikationsverbindung (PLC = Power Line Communication) über eine oder mehrere Leitungen des Ladekabels, welche gegebenenfalls auch stromführend sein können;
- eine von den stromführenden Leitungen getrennte Kontrollverbindung im Ladekabel, wie z.B. über den weiter unten beschriebenen Pilotpin, mit dem ein Kommunikationspfad parallel zu den stromführenden Leitungen im Ladekabel bereitgestellt wird;
- eine vom Ladekabel getrennte Kommunikationsverbindung, wie z.B. mittels Funkübertragung basierend auf WLAN, Bluetooth und dergleichen.

Bei der Verwendung einer vom Ladekabel getrennten Kommunikationsverbindung bzw. bei der PLC-Kommunikationsverbindung erfolgt die Datenübertragung vorzugsweise paketbasiert. Demgegenüber erfolgt die Informationsübertragung über die von den stromführenden Leitungen getrennte Kontrollverbindung im Ladekabel vorzugsweise mittels Pulsweiten- und Amplitudenmodulation.

In einer besonders bevorzugten Ausführungsform der Signalisierung zur Verriegelung bzw. Entriegelung der mechanischen Kopplung über die Kontrollverbindung werden der Ladestelle über diese Kontrollverbindung mehrere Zustände des Elektrofahrzeugs angezeigt, wobei die Zustände einen ersten Zustand umfassen, der anzeigt, dass das Elektrofahrzeug bereit zum Laden seines zumindest einen Energiespeichers ist, sowie einen zweiten Zustand, der anzeigt, dass der zumindest eine Energiespeicher des Elektrofahrzeugs über das Ladekabel geladen wird, wobei ein Wechsel zwischen dem ersten und dem zweiten Zustand eine Signalisierung darstellt, über welche die Verriegelung der mechanischen Kopplung zwischen dem Anschluss des Ladekabels und dem Anschluss der Ladestelle ausgelöst wird, und wobei ein Wechsel von dem zweiten in den ersten Zustand eine Signalisierung darstellt, über welche die Entriegelung der mechanischen Kopplung zwischen dem Anschluss des Ladekabels und dem Anschluss der Ladestelle ausgelöst wird. Die ersten und zweiten Zustände können dabei gegebenenfalls durch bereits aus dem Stand der Technik bekannte Verfahren signalisiert werden. Insbesondere kann der erste bzw. der zweite Zustand den Zustand "ready for charging" bzw. "charging" darstellen, welche in dem noch in der Entwicklung befindlichen Standard ISO/IEC 61851, Part 1, bzw. in dem bereits verabschiedeten Standard SEA J1772 definiert sind. Diese Standards normieren die Kommunikation zwischen einem Elektrofahrzeug und einer Ladestelle.

Um ein unbefugtes Verriegeln bzw. Entriegeln der mechanischen Kopplung zu vermeiden, wird in einer bevorzugten Ausführungsform des erfindungsgemäßen Verfahrens im Rahmen der Kommunikation zwischen Elektrofahrzeug und Ladestelle eine Authentisierung des Elektrofahrzeugs gegenüber der Ladestelle durchgeführt, wobei nur bei erfolgreicher Authentisierung die Signalisierung zur Verriegelung und/oder Entriegelung der mechanischen Kopplung von dem Elektrofahrzeug an die Ladestelle übermittelt wird.

In einer besonders bevorzugten Ausführungsform der soeben beschriebenen Variante werden Authentisierungsdaten zur Durchführung der Authentisierung über die oben beschriebene Kontrollverbindung im Ladekabel übertragen, wobei anschließend die Authentisierung über die PLC-Kommunikationsverbindung im Ladekabel und/oder die vom Ladekabel getrennte Kommunikationsverbindung durchgeführt wird. Die Authentisierungsdaten können dabei insbesondere eine Identifikation des Fahrzeugs und/oder des Fahrzeugnutzers bzw. entsprechende digitale Schlüssel und/oder Zertifikate umfassen, welche anschließend zur Authentisierung eingesetzt werden.

Erfindungsgemäß kann die Signalisierung zur Verriegelung und/oder Entriegelung der mechanischen Kopplung auf verschiedene Art und Weise vom Fahrzeug ausgelöst werden. Beispielsweise kann die Signalisierung in Reaktion auf die Betätigung der Zentralverriegelung des Fahrzeugs erfolgen. Insbesondere wird dabei beim Verschließen des Fahrzeugs mittels der Zentralverriegelung die Verriegelung der mechanischen Kopplung ausgelöst und beim Öffnen des Fahrzeugs über die Zentralverriegelung die Entriegelung der mechanischen Kopplung ausgelöst. Ebenso ist es möglich, dass die Signalisierung zur Verriegelung und/oder Entriegelung der mechanischen Kopplung in Reaktion auf die Betätigung eines Schalters im Elektrofahrzeug durch einen Benutzer erfolgt.

Neben dem oben beschriebenen Verfahren betrifft die Erfindung ferner ein System zur Kommunikation zwischen einem Elektrofahrzeug und einer Ladestelle zum elektrischen Laden zumindest eines Energiespeichers des Elektrofahrzeugs, wobei das Elektrofahrzeug beim Ladevorgang über eine verriegelbare mechanische Kopplung zwischen einem Anschluss eines mit dem Elektrofahrzeug verbundenen Ladekabels und einem Anschluss der Ladestelle angeschlossen ist, um über das Ladekabel dem zumindest einen Energiespeicher Ladestrom von der Ladestelle zuzuführen. Das System umfasst dabei eine erste, für das Elektrofahrzeug vorgesehene Kommunikationssteuereinheit und eine zweite, für die Ladestelle vorgesehene Kommunikationssteuereinheit, wobei über die erste und zweite Kommunikationssteuereinheit im Betrieb des Systems im Rahmen des Ladevorgangs basierend auf einer Kommunikation zwischen Elektrofahrzeug und Ladestelle Informationen übertragen werden. Die erste und zweite Kommunikationssteuereinheit sind dabei derart ausgestaltet, dass die übertragenen Informationen eine durch die erste Kommunikationssteuereinheit generierte Signalisierung zur Verriegelung und/oder Entriegelung der mechanischen Kopplung umfassen, wobei über die Signalisierung eine Verriegelung und/oder Entriegelung der mechanischen Kopplung zwischen dem Anschluss des Ladekabels und dem Anschluss der Ladestelle durch die zweite Kommunikationssteuereinheit ausgelöst wird.

Das oben beschriebene System ist dabei vorzugsweise derart ausgestaltet, dass eine oder mehrere Varianten des erfindungsgemäßen Verfahrens mit dem System durchführbar sind.

Die Erfindung betrifft ferner ein Elektrofahrzeug zur Verwendung in dem oben beschriebenen erfindungsgemäßen Verfahren, umfassend zumindest einen Energiespeicher, wobei das Elektrofahrzeug beim Ladevorgang an eine Ladestelle zum elektrischen Laden des zumindest einen Energiespeichers über eine verriegelbare mechanische Kopplung zwischen einem Anschluss eines mit dem Elektrofahrzeug verbundenen Ladekabels und einem Anschluss der Ladestelle anschließbar ist, um über das Ladekabel dem zumindest einen Energiespeicher Ladestrom von der Ladestelle zuzuführen, wobei im Rahmen des Ladevorgangs basierend auf einer Kommunikation zwischen Elektrofahrzeug und Ladestelle von einer Kommunikationssteuereinheit des Elektrofahrzeugs Informationen an die Ladestelle übertragbar sind. Die Kommunikationssteuereinheit ist dabei derart ausgestaltet ist, dass sie eine vorbestimmte, ausschließlich zur Verriegelung und/oder Entriegelung der mechanischen Kopplung vorgesehene Signalisierung an die Ladestelle aussenden kann, um in der Ladestelle eine Verriegelung und/oder Entriegelung der mechanischen Kopplung zwischen dem Anschluss des Ladekabels und dem Anschluss der Ladestelle auszulösen. Wie bereits oben beschrieben, kann die vorbestimmte Signalisierung durch die Kommunikationssteuereinheit z. B. bei Betätigung der Zentralverriegelung des Elektrofahrzeugs und/oder eines Schalters im Elektrofahrzeug ausgesendet werden.

Die Erfindung betrifft darüber hinaus eine Ladestelle zur Verwendung in dem oben beschriebenen erfindungsgemäßen Verfahren. Die Ladestelle dient dabei zum elektrischen Laden zumindest eines Energiespeichers eines Elektrofahrzeugs, wobei das Elektrofahrzeug beim Ladevorgang an die Ladestelle über eine verriegelbare mechanische Kopplung zwischen einem Anschluss eines mit dem Elektrofahrzeug verbundenen Ladekabels und einem Anschluss der Ladestelle angeschlossen ist, um über das Ladekabel dem zumindest einen Energiespeicher Ladestrom von der Ladestelle zuzuführen. Die Ladestelle umfasst dabei eine Kommunikationssteuereinheit, an welche im Rahmen des Ladevorgangs basierend auf einer Kommunikation zwischen Elektrofahrzeug und Ladestelle Informationen übertragbar sind. Die Kommunikationssteuereinheit ist dabei derart ausgestaltet, dass sie bei Empfang einer vorbestimmten, von dem Elektrofahrzeug an die Ladestelle übermittelten Signalisierung eine Verriegelung und/oder Entriegelung der mechanischen Kopplung zwischen dem Anschluss des Ladekabels und dem Anschluss der Ladestelle auslöst.

Ausführungsbeispiele der Erfindung werden nachfolgend anhand der beigefügten Figuren detailliert beschrieben.

Es zeigen:
- Fig. 1: eine schematische Darstellung der Kommunikation einer Ladestelle mit einem Elektrofahrzeug und mit weiteren Komponenten, wobei im Rahmen der Kommunikation zwischen Ladestelle und Fahrzeug das erfindungsgemäße Verfahren eingesetzt werden kann;
- Fig. 2: eine schematische Darstellung des Aufbaus des Steckers eines Ladekabels zur Verbindung mit einer Ladestelle, wobei der Stecker in der Ladestelle mit Hilfe des erfindungsgemäßen Verfahrens verriegelt werden kann; und
- Fig. 3: eine Darstellung einer Kommunikation zwischen einer Kommunikationssteuereinheit in einem Elektrofahrzeug und einer Kommunikationssteuereinheit in einer Ladestelle zur Verdeutlichung von möglichen Varianten des erfindungsgemäßen Verfahrens.

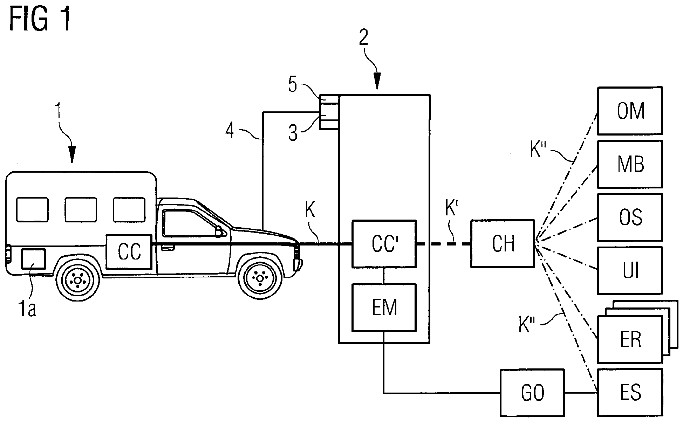

Zur Realisierung einer Infrastruktur zum Laden der Batterien eines Elektrofahrzeugs wird derzeit der Standard ISO/IEC 61851 und ISO/IEC 15118 entwickelt, mit dem die Kommunikation zwischen einem Elektrofahrzeug und einer entsprechenden Ladestelle zum elektrischen Laden der Batterie des Fahrzeugs normiert werden soll. Die nachfolgenden Ausführungsformen werden in Bezug auf diesen Standard beschrieben. Fig. 1 stellt schematisch die Kommunikation zwischen einem Elektrofahrzeug 1 und einer entsprechenden Ladestelle 2 dar, wobei die Ladestelle 2 ferner mit weiteren logischen Komponenten kommunizieren kann. Gemäß Fig. 1 umfasst das Elektrofahrzeug 1 eine Batterie 1a sowie eine Kommunikationssteuereinheit CC. Diese Kommunikationssteuereinheit CC kommuniziert mit einer entsprechenden Kommunikationssteuereinheit CC' innerhalb einer Ladestelle bzw. einer Ladesäule 2. Die Kommunikation zwischen den Steuereinheiten CC und CC' ist schematisch durch die durchgezogene Linie K angedeutet. Diese Kommunikation ist gemäß der Normenfamilien ISO/IEC 61851 und ISO/IEC 15118 komplett zu standardisieren.

Gemäß Fig. 1 ist das Fahrzeug über einen Stecker 3 eines Ladekabels 4 mit einer entsprechenden Buchse 5 der Ladesäule 2 verbunden. Gemäß dem dargestellten Szenario hat ein Fahrer, der die Batterie 1a seines Elektrofahrzeugs 1 laden möchte, das Fahrzeug über das Ladekabel 4 an die Ladesäule 2 angesteckt, um auf diese Weise über das Ladekabel der Batterie 1a Ladestrom zuzuführen. Im Rahmen des Ladevorgangs erfolgt dabei die Kommunikation K zwischen dem Fahrzeug 1 und der Ladestelle 2, wobei die Kommunikation über verschiedene Kommunikationswege erfolgen kann, wie noch weiter unten näher erläutert wird.

Um den vom Fahrzeug bezogenen Strom dem Fahrzeughalter in geeigneter Weise bereitzustellen bzw. gegenüber diesem abzurechnen, sind gemäß Fig. 1 noch weitere Komponenten vorgesehen. Die elektrische Energie wird der Ladesäule 2 über einen Netzbetreiber GO bereitgestellt, wobei der Netzbetreiber die Energie von einem Elektrizitätsversorger bzw. Stromlieferanten ES bezieht. Die von der Ladestelle 2 entnommene Energie wird dabei von einer Elektrizitäts-Messvorrichtung EM innerhalb der Ladestelle erfasst. Die zur Ladung der Batterie des Fahrzeugs 1 benötigte Energie wird über eine Abrechnungsstelle CH in geeigneter Weise abgerechnet, wobei die Abrechnungsstelle hierfür mit der Kommunikationssteuereinheit CC' der Ladestelle 2 kommuniziert, wie durch den gestrichelten Pfeil K' angedeutet ist. Diese Kommunikation K' soll auf Nachrichtenebene im Standard ISO/IEC 15118 normiert werden.

Die Abrechnungsstelle CH kann mit weiteren Komponenten kommunizieren, wobei die Kommunikation mit den weiteren Komponenten durch gestrichelte Linien angedeutet ist, welche aus Übersichtlichkeitsgründen nur teilweise mit Bezugszeichen K" versehen sind. Die Komponente OM stellt dabei den Originalhersteller des Fahrzeugs 1 dar. Die Komponente MB betrifft einen Mobilitätsbetreiber, beispielsweise den Vermieter einer Fahrzeugflotte, dem auch das Fahrzeug 1 gehört. Über die Komponente OS werden weitere, beliebig ausgestaltete Mehrwertdienste bereitgestellt. Die Komponente UI ist eine Benutzerschnittstelle, beispielsweise ein Mobiltelefon des Fahrzeughalters 1, über die dem Fahrzeughalter von der Abrechnungsstelle Informationen übermittelt werden. Die Komponente ER betrifft einen oder mehrere Stromhändler, über welche alternativ bzw. zusätzlich zu dem dargestellten Energieversorger ES Strom bezogen werden kann. Die Kommunikation K" mit den weiteren Komponenten liegt außerhalb der Standardisierung gemäß der Norm ISO/IEC 15118. Die Kommunikation der Abrechnungsstelle CH mit der Ladestelle 2 bzw. den weiteren Komponenten ist nicht wesentlich für das erfindungsgemäße Verfahren, so dass auf diese Kommunikationspfade nicht weiter eingegangen wird.

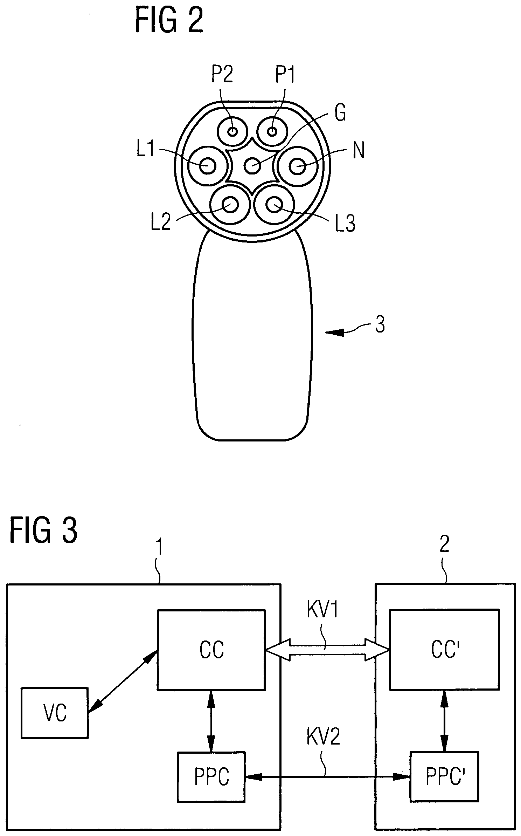

Zum Laden des Fahrzeugs 1 an der Ladestelle 2 wird in der hier beschriebenen Ausführungsform ein Ladekabel mit einem genormten Stecker 3 verwendet, dessen Aufbau in Fig. 2 in Draufsicht gezeigt ist. Zum elektrischen Zuführen des dreiphasigen Ladestroms enthält der Stecker die drei Pins L1, L2 und L3 sowie den Nullleiter-Pin N und den Erdungspin G. Darüber hinaus umfasst der Stecker einen Steuerpin P1, der auch als Pilotpin bezeichnet wird, sowie einen weiteren Pin P2, durch den über einen elektrischen Widerstand erfasst wird, ob der Stecker 3 in eine entsprechende Buchse 5 de Ladestelle eingesteckt ist. Der Stecker 3 kann in der Buchse 5 über eine entsprechende Verriegelungsvorrichtung gegen ein unbefugtes Entfernen verriegelt werden, wobei die Verriegelungsvorrichtung nicht aus den Figuren ersichtlich ist. Eine solche Verriegelungsvorrichtung ist aus dem Stand der Technik bekannt und kann beispielsweise dadurch realisiert werden, dass zur Verriegelung aus der Buchse die Ladestelle entsprechende Zapfen ausfahren, welche in am Stecker angebrachte Nuten eingreifen. Die Zapfen bzw. Nuten können dabei in gleichmäßigen Abständen entlang des Außenumfangs des Steckers 3 angeordnet sein. In einer bevorzugten Ausführungsform werden drei, im 60°-Winkel am Umfang des Steckers angeordnete Zapfen bzw. Nuten verwendet.

Herkömmlicherweise erfolgt die Verriegelung des Steckers 3 in der Buchse 5 der Ladestelle 2 durch die Eingabe eines entsprechenden Codes durch den Fahrzeughalter an der Ladestelle. Ziel des erfindungsgemäßen Verfahrens ist es nunmehr, die Verriegelung bzw. Entriegelung basierend auf der Kommunikation K zwischen Fahrzeug 1 und Ladestelle 2 zu bewirken. Hierfür wird eine geeignete Signalisierung von der Steuereinheit CC des Fahrzeugs an die Steuereinheit CC' der Ladestelle übermittelt, wobei die Steuereinheit CC' bei Empfang dieser Signalisierung die Verriegelung bzw. Entriegelung des Steckers 3 in der Buchse 5 auslöst.

Fig. 3 zeigt verschiedene Varianten, wie die Signalisierung zur Verriegelung bzw. Entriegelung des Steckers 3 in der Buchse 5 erfolgen kann. Fig. 3 zeigt in schematisierter Darstellung nochmals die Kommunikationssteuereinheit CC auf Seiten der Fahrzeugs 1 und die Kommunikationssteuereinheit CC' auf Seiten der Ladesäule 2. Die Kommunikationssteuereinheit CC im Fahrzeug kommuniziert mit weiteren Komponenten im Fahrzeug, welche beispielhaft durch den Block VC angedeutet sind. Diese Komponenten umfassen unter anderem ein Ladegerät für die Batterie des Fahrzeugs sowie ein Batterie-Management-System. Die Kommunikationssteuereinheit CC kommuniziert in der Ausführungsform der Fig. 3 ferner über eine erste Kommunikationsverbindung KV1 mit der Kommunikationssteuereinheit CC' der Ladestelle 2. Des Weiteren kommuniziert die Kommunikationssteuereinheit unter Zwischenschaltung eines Controllers PPC auf Seiten des Fahrzeugs 1 und eines Controllers PPC' auf Seiten der Ladestelle 2 über eine zweite Kommunikationsverbindung KV2 mit der Kommunikationssteuereinheit CC'. Die Kommunikationsverbindung KV2 ist dabei die über den Pilotpin P1 des Steckers 3 hergestellte Verbindung zwischen Fahrzeug 1 und Ladestelle 2. Die Kommunikationsverbindung wird über den Controller PPC auf Seiten des Fahrzeugs 1 und den Controller PPC' auf Seiten der Ladestelle 2 verwaltet, wobei die beiden Controller auch als Bestandteile der Kommunikationssteuereinheiten CC bzw. CC' aufgefasst werden können.

Herkömmlicherweise werden über die Kommunikationsverbindung KV2 Basisinformationen übermittelt, welche im Rahmen des Ladevorgangs benötigt werden. Insbesondere wird die Information übermittelt, ob der Stecker in einer Ladesäule eingesteckt ist (wird über den Pin P2 ermittelt), welcher Lademodus aus einer bestimmten Anzahl von Lademodi ausgewählt ist sowie in welchem Zustand das Fahrzeug ist. Darüber hinaus können im Rahmen der Kommunikation über die Verbindung KV2 Identifikationen bzw. Authentisierungsdaten, wie z.B. entsprechende Schlüssel, übermittelt werden, welche dann für die weiter unten beschriebene Kommunikation über die Verbindung KV1 zur Autorisierung bzw. Authentisierung des Fahrzeugs 1 gegenüber der Ladestelle 2 benutzt werden.

In einer Variante des erfindungsgemäßen Verfahrens wird über die Kommunikationsverbindung KV2 auch signalisiert, dass der Stecker 3 in der Ladestelle zu verriegeln bzw. zu entriegeln ist. In einer Ausführungsform kann diese Information beispielsweise durch einen Wechsel zwischen dem signalisierten Fahrzeug-Zuständen "Bereit zum Laden" (englisch: ready for charging) und "Ladend" (englisch: charging) erfolgen. In der oben beschriebenen Norm IEC 61851, Teil 1, Annex A, werden bereits entsprechende Fahrzeug-Zustände über die Kommunikationsverbindung KV2 übertragen. Diese Zustände umfassen neben den Zuständen "ready for charging" und "charging" auch den Zustand "disconnected", der anzeigt, dass der Stecker nicht mit der Ladestelle verbunden ist. Der Zustand "ready for charging" steht dabei für einen Zustand, bei dem das Laden der Batterie des Elektrofahrzeugs möglich ist, jedoch der Ladevorgang noch nicht begonnen wurde. Der Zustand "charging" steht für einen gerade durchgeführten Ladevorgang der Batterie des Elektrofahrzeugs. Der Zustand "disconnected" betrifft einen Zustand, in dem das Elektrofahrzeug nicht mit der Ladestelle verbunden ist. Die Informationsübermittlung betreffend diese drei Zustände erfolgt dabei über Pulsweitenmodulation, wobei über entsprechende Spannungsniveaus auf der positiven Halbwelle des pulsweitenmodulierten Signals die genannten drei Zustände vom Fahrzeug an die Ladestelle kommuniziert werden. Darüber hinaus wird über die Pulsweite von der Ladestelle an das Fahrzeug die Information übermittelt, welche Leistung von der Ladestelle zum Laden der Batterie bereitgestellt wird. Die drei oben genannten Zustände sind auch in dem bereits verabschiedeten Standard SEA J1772 zur Kommunikation zwischen einem Fahrzeug und einer Ladestelle definiert und können auch in Rahmen dieses Standards zur Signalisierung einer Verriegelung bzw. Entriegelung des Steckers des Ladekabels in der Ladestelle verwendet werden.

In einer bevorzugten Variante der Signalisierung zur Ver- bzw. Entriegelung mittels der Zustände "ready for charchging" und "charging" wird ein Verriegeln des Steckers dadurch signalisiert, dass vom Zustand "ready for charging" zum Zustand "charging" gewechselt wird, woraufhin die Ladestelle den Stecker in der Buchse verriegelt. Das Entriegeln kann dabei in umgekehrter Weise dadurch signalisiert werden, dass vom Zustand "charging" zum Zustand "ready for charging" gewechselt wird, woraufhin die Ladestelle den Stecker entriegelt. Es sind dabei auch andere Varianten der Signalisierung des Verriegelns bzw. Entriegelns des Steckers denkbar, beispielsweise kann auch ein separates dediziertes Steuersignal zum Ver- bzw. Entriegeln über die Verbindung KV2 übertragen werden.

In dem Ausführungsbeispiel der Fig. 3 kann die Signalisierung des Verriegelns bzw. Entriegelns des Steckers auch über die weitere dargestellte Kommunikationsverbindung KV1 erfolgen. Diese Kommunikationsverbindung stellt eine höherwertige Kommunikationsverbindung zwischen den Kommunikationssteuereinheiten CC und CC' als die Verbindung KV2 dar. Die Verbindung KV1 kann z.B. eine PLC-Kommunikation (PLC = Power Line Communication) über eine gegebenenfalls auch stromführenden Leitung im Ladekabel darstellen. Ebenso besteht die Möglichkeit, dass ein vom Ladekabel getrennter Kommunikationskanal, z.B. eine Funkübertragung (insbesondere über WLAN oder Bluetooth), zum Datenaustausch verwendet wird. Über die Kommunikationsverbindung KV1 erfolgt insbesondere eine Authentisierung des Fahrzeugs 1 über die Ladestelle 2, wobei hierfür auch die über die Kommunikationsverbindung KV2 übertragenen Authentisierungsdaten genutzt werden können. Über die Kommunikationsverbindung KV1 werden gegebenenfalls auch weitergehende Informationen für spezielle Ladevorgänge ausgetauscht, insbesondere Ladeprofile, der Ladezustand der Batterie und weitere Steuerparameter. Im Rahmen der Erfindung kann gegebenenfalls auch diese Kommunikationsverbindung KV1 dazu genutzt werden, um hierüber der Ladestelle in geeigneter Weise das Verriegeln bzw. Entriegeln des Steckers zu signalisieren.

Die Übermittlung der Signalisierung zum Verriegeln bzw. Entriegeln des Steckers kann an verschiedene, im Fahrzeug ausgeführte Aktionen gekoppelt sein. Beispielsweise kann die Signalisierung an die Zentralverriegelung des Fahrzeugs gekoppelt sein, so dass beim Aufschließen bzw. Abschließen des Fahrens auch die Entriegelung bzw. Verriegelung des Steckers signalisiert wird. Ebenso besteht die Möglichkeit, dass die Entriegelung bzw. Verriegelung explizit durch den Fahrzeugbenutzer durch einen Schalter im Fahrzeug initiiert wird, in Analogie zu einem Schalter zur Verriegelung bzw. Entriegelung der Tankklappe des Fahrzeugs. Allgemein kann die Signalisierung zum Verriegeln bzw. Entriegeln des Steckers gekoppelt mit einer Signalisierung für den Ladevorgang übermittelt werden, beispielsweise gekoppelt mit der Signalisierung für den Start und das Ende des Ladevorgangs bzw. mit der Signalisierung zum Spannungsanlegen bzw. zur Spannungsfreischaltung der Steckerkontakte des Steckers 3. Ebenso kann die Signalisierung zum Ver- bzw. Entriegeln auch separat zu einer Signalisierung betreffend den Ladevorgang übertragen werden.

Das im Vorangegangenen beschriebene erfindungsgemäße Verfahren weist den Vorteil auf, dass die Verriegelung bzw. Entriegelung eines Steckers in der Ladestelle nunmehr entfernt vom Fahrzeug aus veranlasst werden kann. Es ist somit nicht mehr erforderlich, dass der Fahrer des Fahrzeugs sich separat an der Ladestelle autorisiert, um beispielsweise über einen Pincode die Verriegelung bzw. Entriegelung des Steckers auszulösen.

## Patentansprüche

1. Verfahren zur Kommunikation zwischen einem Elektrofahrzeug (1) und einer Ladestelle (2) zum elektrischen Laden zumindest eines Energiespeichers (1a) des Elektrofahrzeugs (1), wobei das Elektrofahrzeug (1) beim Ladevorgang an die Ladestelle (2) über eine verriegelbare mechanische Kopplung zwischen einem Anschluss (3) eines mit dem Elektrofahrzeug (1) verbundenen Ladekabels (4) und einem Anschluss (5) der Ladestelle (2) angeschlossen ist, um über das Ladekabel (4) dem zumindest einen Energiespeicher (1a) Ladestrom von der Ladestelle (2) zuzuführen, wobei im Rahmen des Ladevorgangs basierend auf einer Kommunikation zwischen Elektrofahrzeug (1) und Ladestelle (2) Informationen übertragen werden,
**dadurch gekennzeichnet, dass**
die übertragenen Informationen eine von dem Elektrofahrzeug (1) an die Ladestelle (2) übermittelte Signalisierung zur Entriegelung der mechanischen Kopplung umfassen, wobei über die Signalisierung in der Ladestelle eine Entriegelung der mechanischen Kopplung zwischen dem Anschluss (3) des Ladekabels (4) und dem Anschluss (5) der Ladestelle (2) ausgelöst wird.

2. Verfahren nach Anspruch 1, **dadurch gekennzeichnet, dass** die Signalisierung zur Entriegelung der mechanischen Kopplung mit einer Signalisierung betreffend den Ladevorgang und/oder Ladezustand des zumindest einen Energiespeichers (1a) des Elektrofahrzeugs (1) gekoppelt ist, insbesondere mit einer Signalisierung zum Start und/oder Beenden des Ladevorgangs und/oder zum Anlegen und/oder Freischalten einer Spannung auf dem Ladekabel (4) durch die Ladestelle (2).

3. Verfahren nach Anspruch 1 oder 2, **dadurch gekennzeichnet, dass** die Signalisierung zur Entriegelung der mechanischen Kopplung von einer Signalisierung betreffend den Ladevorgang und/oder Ladezustand des zumindest einen Energiespeichers (1a) des Elektrofahrzeugs (1) entkoppelt ist.

4. Verfahren nach einem der vorhergehenden Ansprüche, **dadurch gekennzeichnet, dass** zur Kommunikation (K) zwischen Elektrofahrzeug (1) und Ladestelle (2) eine oder mehrere der folgenden Kommunikationsverbindungen (KV1, KV2) eingesetzt werden, wobei über zumindest eine der folgenden Kommunikationsverbindungen (KV1, KV2) die Signalisierung zur Entriegelung der mechanischen Kopplung übermittelt wird:
- eine PLC-Kommunikationsverbindung (KV1) über eine oder mehrere stromführende Leitungen (L1, L2, L3) des Ladekabels;
- eine von den stromführenden Leitungen getrennte Kontrollverbindung (KV2) im Ladekabel;
- eine vom Ladekabel getrennte Kommunikationsverbindung (KV1), insbesondere eine drahtlose Kommunikationsverbindung.

5. Verfahren nach Anspruch 4, **dadurch gekennzeichnet, dass** die Informationsübertragung über die PLC-Kommunikationsverbindung (KV1) und/oder die vom Ladekabel getrennte Kommunikationsverbindung (KV1) paketbasiert erfolgt und/oder die Informationsübertragung über die Kontrollverbindung (KV2) im Ladekabel (5) mittels Pulsweiten- und/oder Amplitudenmodulation erfolgt.

6. Verfahren nach Anspruch 4 oder 5, **dadurch gekennzeichnet, dass** der Ladestelle (2) über die Kontrollverbindung (KV2) mehrere Zustände des Elektrofahrzeugs (1) angezeigt werden, wobei die Zustände einen ersten Zustand umfassen, der anzeigt, dass das Elektrofahrzeug (1) bereit zum Laden seines zumindest einen Energiespeichers (1a) ist, sowie einen zweiten Zustand, der anzeigt, dass der zumindest eine Energiespeicher (1a) des Elektrofahrzeugs (1) über das Ladekabel (4) geladen wird, wobei ein Wechsel zwischen dem ersten und zweiten Zustand eine Signalisierung darstellt, über welche die Verriegelung der mechanischen Kopplung zwischen dem Anschluss (3) des Ladekabels (4) und dem Anschluss (5) der Ladestelle (2) ausgelöst wird, und wobei ein Wechsel von dem zweiten in den ersten Zustand eine Signalisierung darstellt, über welche die Entriegelung der mechanischen Kopplung zwischen dem Anschluss (3) des Ladekabels (4) und dem Anschluss (5) der Ladestelle (2) ausgelöst wird.

7. Verfahren nach einem der vorhergehenden Ansprüche, **dadurch gekennzeichnet, dass** im Rahmen der Kommunikation zwischen Elektrofahrzeug (1) und Ladestelle (2) eine Authentisierung des Elektrofahrzeugs (1) gegenüber der Ladestelle (2) durchgeführt wird, wobei nur bei erfolgreicher Authentisierung die Signalisierung zur Entriegelung der mechanischen Kopplung von dem Elektrofahrzeug (1) an die Ladestelle (2) übermittelt wird.

8. Verfahren nach Anspruch 7 in Kombination mit Anspruch 4, **dadurch gekennzeichnet, dass** Authentisierungsdaten zur Durchführung der Authentisierung über die Kontrollverbindung (KV2) im Ladekabel übertragen werden und anschließend die Authentisierung über die PLC-Kommunikationsverbindung (KV1) im Ladekabel (4) und/oder die vom Ladekabel getrennte Kommunikationsverbindung durchgeführt wird.

9. Verfahren nach einem der vorhergehenden Ansprüche, **dadurch gekennzeichnet, dass** die Signalisierung zur Entriegelung der mechanischen Kopplung in Reaktion auf die Betätigung der Zentralverriegelung des Elektrofahrzeugs (1) übermittelt wird.

10. Verfahren nach einem der vorhergehenden Ansprüche, **dadurch gekennzeichnet, dass** die Signalisierung zur Entriegelung der mechanischen Kopplung in Reaktion auf die Betätigung eines Schalters im Elektrofahrzeug (1) übermittelt wird.

11. System zur Kommunikation zwischen einem Elektrofahrzeug (1) und einer Ladestelle (2) zum elektrischen Laden zumindest eines Energiespeichers (1a) des Elektrofahrzeugs (1), wobei das Elektrofahrzeug (1) beim Ladevorgang an die Ladestelle (2) über eine verriegelbare mechanische Kopplung zwischen einem Anschluss (3) eines mit dem Elektrofahrzeug (1) verbundenen Ladekabels (4) und einem Anschluss (5) der Ladestelle (2) angeschlossen ist, um über das Ladekabel (4) dem zumindest einen Energiespeicher (1a) Ladestrom von der Ladestelle (2) zuzuführen, wobei das System eine erste Kommunikationssteuereinheit (CC) für das Elektrofahrzeug und eine zweite Kommunikationssteuereinheit (CC') für die Ladestelle umfasst, wobei über die erste und zweite Kommunikationssteuereinheit (CC, CC') im Betrieb des Systems im Rahmen des Ladevorgangs basierend auf einer Kommunikation zwischen Elektrofahrzeug (1) und Ladestelle (2) Informationen übertragen werden,
**dadurch gekennzeichnet, dass**
die die erste und zweite Kommunikationssteuereinheit (CC, CC') derart ausgestaltet sind, dass die übertragenen Informationen eine durch die erste Kommunikationssteuereinheit generierte Signalisierung zur Entriegelung der mechanischen Kopplung umfassen, wobei über die Signalisierung eine Entriegelung der mechanischen Kopplung zwischen dem Anschluss (3) des Ladekabels (4) und dem Anschluss (5) der Ladestelle (2) durch die zweite Kommunikationssteuereinheit ausgelöst wird.

12. System nach Anspruch 11, **dadurch gekennzeichnet, dass** das System derart ausgestaltet ist, dass ein Verfahren nach einem der Ansprüche 2 bis 11 mit dem System durchführbar ist.

13. Elektrofahrzeug zur Verwendung in einem Verfahren nach einem der Ansprüche 1 bis 10, mit zumindest einem Energiespeicher (la), wobei das Elektrofahrzeug (1) beim Ladevorgang an eine Ladestelle (2) zum elektrischen Laden des zumindest einen Energiespeichers (1a) über eine verriegelbare mechanische Kopplung zwischen einem Anschluss (3) eines mit dem Elektrofahrzeug (1) verbundenen Ladekabels (4) und einem Anschluss (5) der Ladestelle (2) anschließbar ist, um über das Ladekabel (4) dem zumindest einen Energiespeicher (1a) Ladestrom von der Ladestelle (2) zuzuführen, wobei im Rahmen des Ladevorgangs basierend auf einer Kommunikation zwischen Elektrofahrzeug (1) und Ladestelle (2) von einer Kommunikationssteuereinheit (CC) des Elektrofahrzeugs (1) Informationen an die Ladestelle (2) übertragbar sind,
**dadurch gekennzeichnet, dass**
die Kommunikationssteuereinheit (CC) derart ausgestaltet ist, dass sie eine vorbestimmte, ausschließlich zur Entriegelung der mechanischen Kopplung vorgesehene Signalisierung an die Ladestelle (2) aussenden kann, um in der Ladestelle (2) eine Entriegelung der mechanischen Kopplung zwischen dem Anschluss (3) des Ladekabels (4) und dem Anschluss (5) der Ladestelle (2) auszulösen.

14. Elektrofahrzeug nach Anspruch 13, **dadurch gekennzeichnet, dass** die vorbestimmte Signalisierung durch die Kommunikationssteuereinheit (CC) bei Betätigung der Zentralverriegelung des Elektrofahrzeugs (1) und/oder eines Schalters im Elektrofahrzeug (1) aussendbar ist.

15. Ladestelle zur Verwendung in einem Verfahren nach einem der Ansprüche 1 bis 10, zum elektrischen Laden zumindest eines Energiespeichers (1a) eines Elektrofahrzeugs (1), wobei das Elektrofahrzeug (1) beim Ladevorgang an die Ladestelle (2) über eine verriegelbare mechanische Kopplung zwischen einem Anschluss (3) eines mit dem Elektrofahrzeug (1) verbundenen Ladekabels (4) und einem Anschluss (5) an der Ladestelle (2) angeschlossen ist, um über das Ladekabel (4) dem zumindest einen Energiespeicher (1a) Ladestrom von der Ladestelle (2) zuzuführen, wobei die Ladestelle (2) eine Kommunikationssteuereinheit (CC') umfasst, an welche im Rahmen des Ladevorgangs basierend auf einer Kommunikation zwischen Elektrofahrzeug (1) und Ladestelle (2) Informationen übertragbar sind,
**dadurch gekennzeichnet, dass**
die Kommunikationssteuereinheit (CC') derart ausgestaltet ist, dass sie bei Empfang einer vorbestimmten, von dem Elektrofahrzeug (1) an die Ladestelle (2) übermittelten Signalisierung eine Entriegelung der mechanischen Kopplung zwischen dem Anschluss (3) des Ladekabels (4) und dem Anschluss (5) der Ladestelle (2) auslöst.

## Claims

1. Method for communication between an electric vehicle (1) and a charging station (2) for electrically charging at least one energy store (1a) of the electric vehicle (1), the electric vehicle (1) being connected, during the charging operation, to the charging station (2) via a lockable mechanical coupling between a terminal (3) of a charging cable (4) connected to the electric vehicle (1) and a terminal (5) of the charging station (2) in order to supply charging current from the charging station (2) to the at least one energy store (1a) via the charging cable (4), with information being transmitted over the course of the charging operation on the basis of communication between the electric vehicle (1) and the charging station (2),
**characterized in that**
the transmitted information includes a signal transmitted from the electric vehicle (1) to the charging station (2) for unlocking the mechanical coupling, with unlocking of the mechanical coupling between the terminal (3) of the charging cable (4) and the terminal (5) of the charging station (2) being triggered via the signal in the charging station.

2. Method according to Claim 1, **characterized in that** the signal for unlocking the mechanical coupling is coupled to a signal relating to the charging operation and/or state of charge of the at least one energy store (1a) of the electric vehicle (1), in particular to a signal relating to the start and/or end of the charging operation and/or relating to the application and/or safety-disconnection of a voltage on the charging cable (4) by the charging station (2).

3. Method according to Claim 1 or 2, **characterized in that** the signal for unlocking the mechanical coupling is decoupled from a signal relating to the charging operation and/or state of charge of the at least one energy store (1a) of the electric vehicle (1).

4. Method according to one of the preceding claims, **characterized in that** one or more of the following communication connections (KV1, KV2) are used for communication (K) between the electric vehicle (1) and the charging station (2), with the signal for unlocking the mechanical coupling being transmitted via at least one of the following communication connections (KV1, KV2):
- a PLC communication connection (KV1) via one or more current-conducting lines (L1, L2, L3) of the charging cable;
- a monitoring connection (KV2), which is isolated from the current-conducting lines, in the charging cable;
- a communication connection (KV1) which is isolated from the charging cable, in particular a wireless communication connection.

5. Method according to Claim 4, **characterized in that** the information transmission via the PLC communication connection (KV1) and/or the communication connection (KV1), which is isolated from the charging cable, is performed in a packet-based manner and/or the information transmission via the monitoring connection (KV2) in the charging cable (5) is performed by means of pulse-width and/or amplitude modulation.

6. Method according to Claim 4 or 5, **characterized in that** a plurality of states of the electric vehicle (1) are indicated to the charging station (2) via the monitoring connection (KV2), with the states including a first state, which indicates that the electric vehicle (1) is ready for charging its at least one energy store (1a), and a second state, which indicates that the at least one energy store (1a) of the electric vehicle (1) is being charged via the charging cable (4), with a change between the first and second states representing a signal via which the locking of the mechanical coupling between the terminal (3) of the charging cable (4) and the terminal (5) of the charging station (2) is triggered, and a change from the second state into the first state representing a signal via which the unlocking of the mechanical coupling between the terminal (3) of the charging cable (4) and the terminal (5) of the charging station (2) is triggered.

7. Method according to one of the preceding claims, **characterized in that** over the course of the communication between the electric vehicle (1) and the charging station (2), authentication of the electric vehicle (1) with respect to the charging station (2) is performed, the signal for unlocking the mechanical coupling being transmitted from the electric vehicle (1) to the charging station (2) only when authentication is successful.

8. Method according to Claim 7 in combination with Claim 4, **characterized in that** authentication data for performing the authentication are transmitted via the monitoring connection (KV2) in the charging cable, and then the authentication is performed via the PLC communication connection (KV1) in the charging cable (4) and/or the communication connection which is isolated from the charging cable.

9. Method according to one of the preceding claims, **characterized in that** the signal for unlocking the mechanical coupling is transmitted in response to the actuation of the central locking of the electric vehicle (1).

10. Method according to one of the preceding claims, **characterized in that** the signal for unlocking the mechanical coupling is transmitted in response to the actuation of a switch in the electric vehicle (1).

11. System for communication between an electric vehicle (1) and a charging station (2) for electrically charging at least one energy store (1a) of the electric vehicle (1), the electric vehicle (1) being connected, during the charging operation, to the charging station (2) via a lockable mechanical coupling between a terminal (3) of a charging cable (4) connected to the electric vehicle (1) and a terminal (5) of the charging station (2) in order to supply charging current from the charging station (2) to the at least one energy store (1a) via the charging cable (4), the system comprising a first communication control unit (CC) for the electric vehicle and a second communication control unit (CC') for the charging station, with information being transmitted via the first and second communication control units (CC, CC') during operation of the system over the course of the charging operation on the basis of communication between the electric vehicle (1) and the charging station (2),
**characterized in that**
the first and second communication control units (CC, CC') are configured such that the information transmitted includes a signal, generated by the first communication control unit, for unlocking the mechanical coupling, with unlocking of the mechanical coupling between the terminal (3) of the charging cable (4) and the terminal (5) of the charging station (2) being triggered by the second communication control unit via the signal.

12. System according to Claim 11, **characterized in that** the system is configured such that a method according to one of Claims 2 to 11 can be implemented with the system.

13. Electric vehicle for use in a method according to one of Claims 1 to 10, with at least one energy store (1a), with it being possible for the electric vehicle (1) to be connected, during the charging operation, to a charging station (2) for electrically charging the at least one energy store (1a) via a lockable mechanical coupling between a terminal (3) of a charging cable (4) connected to the electric vehicle (1) and a terminal (5) of the charging station (2) in order to supply charging current from the charging station (2) to the at least one energy store (1a) via the charging cable (4), with it being possible for information to be transmitted to the charging station (2) in the course of the charging operation on the basis of communication between the electric vehicle (1) and the charging station (2) from a communication control unit (CC) of the electric vehicle (1),
**characterized in that**
the communication control unit (CC) is configured in such a way that it can transmit a predetermined signal, intended exclusively for unlocking the mechanical coupling, to the charging station (2) in order to trigger unlocking of the mechanical coupling between the terminal (3) of the charging cable (4) and the terminal (5) of the charging station (2) in the charging station (2).

14. Electric vehicle according to Claim 13, **characterized in that** the predetermined signal can be transmitted by the communication control unit (CC) on actuation of the central locking of the electric vehicle (1) and/or a switch in the electric vehicle (1).

15. Charging station for use in a method according to one of Claims 1 to 10, for electrically charging at least one energy store (1a) of an electric vehicle (1), the electric vehicle (1) being connected, during the charging operation, to the charging station (2) via a lockable mechanical coupling between a terminal (3) of a charging cable (4) connected to the electric vehicle (1) and a terminal (5) at the charging station (2) in order to supply charging current from the charging station (2) to the at least one energy store (1a) via the charging cable (4), the charging station (2) comprising a communication control unit (CC'), to which information can be transmitted over the course of the charging operation on the basis of communication between the electric vehicle (1) and the charging station (2),
**characterized in that**
the communication control unit (CC') is configured such that it triggers unlocking of the mechanical coupling between the terminal (3) of the charging cable (4) and the terminal (5) of the charging station (2) on reception of a predetermined signal transmitted from the electric vehicle (1) to the charging station (2).

## Revendications

1. Procédé de communication entre un véhicule électrique (1) et une station de recharge (2) pour le rechargement électrique d'au moins un accumulateur d'énergie (1a) du véhicule électrique (1), dans lequel le véhicule électrique (1), lors de l'opération de recharge, est connecté à la station de recharge (2) par un couplage mécanique verrouillable entre une connexion (3) d'un câble de charge (4) relié au véhicule électrique (1) et une connexion (5) de la station de recharge (2), afin d'alimenter en courant de charge l'au moins un accumulateur d'énergie (1a) depuis la station de recharge (2) via le câble de charge (4), dans lequel, dans le cadre de l'opération de recharge, des informations sont transmises sur la base d'une communication entre le véhicule électrique (1) et la station de recharge (2),
**caractérisé en ce que** les informations transmises comprennent une signalisation envoyée par le véhicule électrique (1) à la station de recharge (2) à des fins de déverrouillage du couplage mécanique, dans lequel, par la signalisation dans la station de recharge, un déverrouillage du couplage mécanique entre la connexion (3) du câble de charge (4) et la connexion (5) de la station de recharge (2) est déclenché.

2. Procédé selon la revendication 1, **caractérisé en ce que** la signalisation pour le déverrouillage du couplage mécanique est couplée à une signalisation concernant l'opération de charge et/ou l'état de charge du au moins un accumulateur d'énergie (1a) du véhicule électrique (1), en particulier à une signalisation pour démarrer et/ou pour terminer l'opération de charge et/ou pour appliquer et/ou pour couper une tension sur le câble de charge (4) par la station de recharge (2).

3. Procédé selon la revendication 1 ou 2, **caractérisé en ce que** la signalisation pour le déverrouillage du couplage mécanique est découplée d'une signalisation concernant l'opération de charge et/ou l'état de charge du au moins un accumulateur d'énergie (1a) du véhicule électrique (1).

4. Procédé selon l'une des revendications précédentes, **caractérisé en ce qu'**une ou plusieurs des liaisons de communication (KV1, KV2) suivantes sont utilisées pour la communication (K) entre le véhicule électrique (1) et la station de recharge (2),
dans lequel la signalisation à des fins de déverrouillage du couplage mécanique est transmise par l'intermédiaire d'au moins une des liaisons de communication (KV1, KV2) suivantes :
- une liaison de communication PLC (KV1) par une ou plusieurs lignes conductrices de courant (L1, L2, L3) du câble de charge,
- une liaison de contrôle (KV2) séparée des lignes conductrices de courant dans le câble de charge,
- une liaison de communication (KV1) séparée du câble de charge, en particulier une liaison de communication sans fil.

5. Procédé selon la revendication 4, **caractérisé en ce que** la transmission d'informations par la liaison de communication PLC (KV1) et/ou la liaison de communication (KV1) séparée du câble de charge s'effectue sous la forme de paquets et/ou la transmission d'informations par la liaison de contrôle (KV2) dans le câble de charge (5) s'effectue au moyen de modulation de largeur d'impulsions et/ou d'amplitude.

6. Procédé selon la revendication 4 ou 5, **caractérisé en ce que** plusieurs états du véhicule électrique (1) sont signalés à la station de recharge (2) par l'intermédiaire de la liaison de contrôle (KV2), dans lequel les états comprennent un premier état, qui indique que le véhicule électrique (1) est prêt pour charger son au moins un accumulateur d'énergie (1a) ainsi qu'un second état, qui indique que l'au moins un accumulateur d'énergie (1a) du véhicule électrique (1) est rechargé via le câble de charge (4), dans lequel un changement entre le premier et le second état forme une signalisation, par laquelle le verrouillage du couplage mécanique entre la connexion (3) du câble de charge (4) et la connexion (5) de la station de recharge (2) est déclenché, et dans lequel un changement du second au premier état forme une signalisation, par laquelle le déverrouillage du couplage mécanique entre la connexion (3) du câble de charge (4) et la connexion (5) de la station de recharge (2) est déclenché.

7. Procédé selon l'une des revendications précédentes, **caractérisé en ce que**, dans le cadre de la communication entre le véhicule électrique (1) et la station de recharge (2), une authentification du véhicule électrique (1) vis-à-vis de la station de recharge (2) est effectuée, dans lequel, uniquement en cas d'authentification réussie, la signalisation à des fins de déverrouillage du couplage mécanique est transmise par le véhicule électrique (1) à la station de recharge (2).

8. Procédé selon la revendication 7 associée à la revendication 4, **caractérisé en ce que** des données d'authentification pour exécuter l'authentification sont transmises via la liaison de contrôle (KV2) dans le câble de charge et ensuite l'authentification est exécutée par le biais de la liaison de communication PLC (KV1) dans le câble de charge (4) et/ou la liaison de communication séparée du câble de charge.

9. Procédé selon l'une des revendications précédentes, **caractérisé en ce que** la signalisation à des fins de déverrouillage du couplage mécanique est transmise en réaction à l'actionnement du verrouillage central du véhicule électrique (1).

10. Procédé selon l'une des revendications précédentes, **caractérisé en ce que** la signalisation à des fins de déverrouillage du couplage mécanique est transmise en réaction à l'actionnement d'un commutateur dans le véhicule électrique (1).

11. Système de communication entre un véhicule électrique (1) et une station de recharge (2) pour le rechargement électrique d'au moins un accumulateur d'énergie (1a) du véhicule électrique (1), dans lequel le véhicule électrique, lors de l'opération de recharge, est connecté à la station de recharge (2) par un couplage mécanique verrouillable entre une connexion (3) d'un câble de charge (4) relié au véhicule électrique (1) et une connexion (5) de la station de recharge (2), afin d'alimenter en courant de charge l'au moins un accumulateur d'énergie (1a) depuis la station de recharge (2) via le câble de charge (4), dans lequel le système comprend une première unité de commande de communication (CC) pour le véhicule électrique et une seconde unité de commande de communication (CC') pour la station de recharge, et dans lequel, par l'intermédiaire de la première et de la seconde unités de commande de communication (CC, CC') lors de l'utilisation du système, dans le cadre de l'opération de recharge, des informations sont transmises sur la base d'une communication entre le véhicule électrique (1) et la station de recharge (2), **caractérisé en ce que** la première et la seconde unités de commande de communication (CC, CC') sont configurées de telle manière que les informations transmises comprennent une signalisation à des fins de déverrouillage du couplage mécanique générée par la première unité de commande de communication, dans lequel, par la signalisation, un déverrouillage du couplage mécanique entre la connexion (3) du câble de charge (4) et la connexion (5) de la station de recharge (2) est déclenché par la seconde unité de commande de communication.

12. Système selon la revendication 11, **caractérisé en ce que** le système est configuré de telle manière qu'un procédé selon l'une des revendications 2 à 11 peut être exécuté par le système.

13. Véhicule électrique à utiliser dans un procédé selon l'une des revendications 1 à 10, comprenant au moins un accumulateur d'énergie (la), dans lequel le véhicule électrique (1), lors de l'opération de recharge, peut être connecté à une station de recharge (2) pour le rechargement électrique d'au moins un accumulateur d'énergie (1a) par un couplage mécanique verrouillable entre une connexion (3) d'un câble de charge (4) relié au véhicule électrique (1) et une connexion (5) de la station de recharge (2), afin d'alimenter en courant de charge l'au moins un accumulateur d'énergie (1a) depuis la station de recharge (2) via le câble de charge (4), dans lequel, dans le cadre de l'opération de recharge, des informations peuvent être transmises par une unité de commande de communication (CC) du véhicule électrique (1) à la station de recharge (2) sur la base d'une communication entre le véhicule électrique (1) et la station de recharge (2),
**caractérisé en ce que** l'unité de commande de communication (CC) est configurée de telle manière qu'elle peut envoyer une signalisation prédéterminée conçue uniquement à des fins de déverrouillage du couplage mécanique à la station de recharge (2), afin de déclencher dans la station de recharge (2) un déverrouillage du couplage mécanique entre la connexion (3) du câble de charge (4) et la connexion (5) de la station de recharge (2).

14. Véhicule électrique selon la revendication 13, **caractérisé en ce que** la signalisation prédéterminée peut être émise par l'unité de commande de communication (CC) lors d'un actionnement du verrouillage central du véhicule électrique (1) et/ou d'un commutateur dans le véhicule électrique (1).

15. Station de recharge destinée à être utilisée dans un procédé selon l'une des revendications 1 à 10, pour le rechargement électrique d'au moins un accumulateur d'énergie (1a) d'un véhicule électrique (1), dans lequel le véhicule électrique (1), lors de l'opération de recharge, est connecté à la station de recharge (2) par un couplage mécanique verrouillable entre une connexion (3) d'un câble de charge (4) relié au véhicule électrique (1) et une connexion (5) au niveau de la station de recharge (2), afin d'alimenter en courant de charge l'au moins un accumulateur d'énergie (1a) depuis la station de recharge (2) via le câble de charge (4), dans lequel la station de recharge (2) comprend une unité de commande de communication (CC'), à laquelle, dans le cadre de l'opération de recharge, des informations peuvent être transmises sur la base d'une communication entre le véhicule électrique (1) et la station de recharge (2) ,
**caractérisé en ce que** l'unité de commande de communication (CC') est configurée de manière à déclencher, lors d'une réception d'une signalisation prédéterminée transmise par le véhicule électrique (1) à la station de recharge (2), un déverrouillage du couplage mécanique entre la connexion (3) du câble de charge (4) et la connexion (5) de la station de recharge (2).
